# EUROPÄISCHE PATENTSCHRIFT

(11) **EP 1 298 349 B1**
(45) Veröffentlichungstag und Bekanntmachung des Hinweises auf die Patenterteilung: **23.03.2005**
(21) Anmeldenummer: 02019507.9
(22) Anmeldetag: 31.08.2002
(51) Int. Cl.: F16F 9/32

(54) **Vorrichtung zum gedämpften Einzug von beweglichen Bauteilen in eine Endlage**
Apparatus for damping movable components as they are drawn into a final position
Dispositif pour faire entrer de façon amortie des composants mobiles dans une position finale

(30) Priorität: 27.09.2001 DE 10147786
(43) Veröffentlichungstag der Anmeldung: 02.04.2003
(73) Patentinhaber: ITW Automotive Products GmbH & Co. KG, 58636 Iserlohn (DE)
(72) Erfinder: Müller, Günther, 97084 Würzburg (DE)
(74) Vertreter: Patentanwälte Hauck, Graalfs, Wehnert, Döring, Siemons, Schildberg

(56) Entgegenhaltungen:
- DE-A- 19 548 156
- US-A- 1 931 178
- US-A- 2 681 468
- US-A- 4 629 167

## Beschreibung

Die Erfindung bezieht sich auf eine Vorrichtung zum gedämpften Einzug von beweglichen Bauteilen in eine Endlage nach Patentanspruch 1.

Es ist bekannt, bewegliche Bauteile mit Hilfe einer Feder in eine Endstellung vorzuspannen, wenn sie aus der Endstellung herausbewegt worden sind. Es ist ferner bekannt, die Zurückstellung mit Hilfe eines geeigneten Dämpfungsmittels aufzufangen. In diesem Zusammenhang sind Dreh- und Lineardämpfer bekannt geworden, die mit einem Dämpfungsfluid zusammenwirken, beispielsweise Luft oder auch einer viskosen Flüssigkeit. Eine Dämpfung derartiger Bauteile findet z.B. in beweglichen Teilen im Automobil statt, bei elektronischen Geräten, aber auch bei beweglichen Möbelteilen, Türen und dergleichen.

Dokument US-A-2 681 468 zeigt die Merkmale des Oberbegriffs von Anspruch 1.

Aus DE 195 48 156 A1 ist eine Vorrichtung zum gedämpften Einzug von beweglichen Bauteilen in eine Endlage bekannt geworden mit einem Dämpferzylinder, der an einem Ende lagefest anbringbar ist. An einem Dämpferkolben im Dämpferzylinder ist eine Kolbenstange angebracht, die über den Dämpferzylinder hinaussteht, wenn der Dämpferkolben vollständig in den Dämpferzylinder eingefahren ist. Eine Feder beaufschlagt den Dämpferkolben in die ausgefahrene Lage vor. Am offenen Ende des Dämpferzylinders ist eine Führung vorgesehen in Form eines quer beweglichen Elements, das mit einer Nockenbahn an der Kolbenstange zusammenwirkt. In der einen Endstellung des Kolbens wird das Element nach dem "Push and Pull"- Prinzip verriegelt bzw. entriegelt.

Das gleiche Prinzip wird bei einer Vorrichtung nach der US 4,629,167 angewendet, bei dem ein Federelement am Dämpferzylinder angebracht ist und ein Ende der Feder über eine Öffnung der Zylinderwand in das Innere des Dämpferzylinders hineinsteht und mit einer Nockenkurve der Kolbenstange zusammenwirkt.

Bauteile, die einen relativ weiten Verstellweg haben, z.B. Schiebetüren bei Möbeln oder in Gebäuden oder bei Schubladen, ist es schwierig, eine Vorspannung über den gesamten Verstellweg so aufzubauen, daß die Rückstellkraft nicht zu hoch wird. Ist dies der Fall, kommt es zu unerwünschten Geräuschen oder gar zu Beschädigungen des Bauteils, wenn keine ausreichende Dämpfung über den gesamten Verstellweg erfolgt. Dämpfer, die über einen langen Weg dämpfen sollen, sind jedoch relativ aufwendig.

Der Erfindung liegt die Aufgabe zugrunde, eine Vorrichtung zum gedämpften Einzug von beweglichen Bauteilen, insbesondere Schubfächern, Schiebetüren oder dergleichen zu schaffen, bei der das Bauteil nur über einen Restweg mit Hilfe eines Federmittels gedämpft in eine Endlage verstellt werden kann.

Diese Aufgabe wird durch die Merkmale des Patentanspruchs 1 gelöst.

Bei der erfindungsgemäßen Vorrichtung ist ein Dämpfungszylinder vorgesehen, der an einem Ende lagefest anbringbar ist. Die Anbringung kann z.B. nahe einer Öffnung in einer Wand, einem Möbelteil oder dergleichen geschehen, welche durch eine Schiebetür, eine Schublade oder dergleichen eingenommen wird. Im Dämpfungszylinder ist ein Dämpfungskolben angeordnet. Dämpfungszylinder und Dämpfungskolben können herkömmlich ausgeführt sein. Der Kolben kann so ausgebildet sein, daß er in beiden Verstellrichtungen dämpft oder nur in einer. Für beide Ausführungsformen gibt es zahlreiche Beispiele im Stand der Technik. Der Dämpfungskolben ist mit einer Kolbenstange versehen, die auch dann aus dem Dämpfungszylinder heraussteht, wenn der Dämpfungskolben vollständig in den Zylinder eingefahren ist. Eine Feder zwischen Dämpfungskolben und einem Widerlager am oberen Ende des Dämpfungszylinders oder einem Deckel für den Dämpfungszylinder spannt den Dämpfungskolben in die Endlage vor. Die Feder ist mithin eine Druckfeder, die beim Ausfahren der Kolbenstange zusammengedrückt wird und den Kolben mithin in die Endlage drückt. Es ist jedoch auch eine Feder zwischen dem Kolben und dem Boden des Dämpfungszylinders vorstellbar, die als Zugfeder ausgeführt ist. Vorzugsweise arbeitet die Dämpfung mit dem Dämpfungskolben, der als Luftdämpfer ausgeführt ist, auf Druck, um größere Beschleunigungsdifferenzen bei der Verstellung des Bauteils in die Endlage aufnehmen zu können.

Am kolbenstangenseitigen Ende des Dämpfüngszylinders ist eine Führung angeordnet, mit der ein an der Kolbenstange angebrachter Folger so zusammenwirkt. Sie weist einen längeren in Axialrichtung verlaufenden linearen Führungsabschnitt 12 und einen davon abknickenden Querabschnitt auf. Die Kolbenstange wird durch einen quer verlaufenden Abschnitt zur Seite hin ausgelenkt wird, wenn diese eine vorgegebene Strecke aus dem Dämpfungszylinder herausbewegt worden ist. Am Bauteil ist ein Mitnehmerabschnitt angebracht, der bei einer linearen Verstellung des Bauteils ebenfalls linear bewegt wird. Er wirkt mit einem Rastabschnitt am Ende der Kolbenstange so zusammen, daß der Rastabschnitt den Mitnehmer freigibt, wenn der Folger in den Querabschnitt eingetreten ist. Er nimmt den Mitnehmerabschnitt hingegen mit, sobald der Folger durch einen Druck des Mitnehmers gegen die Kolbenstange aus dem Querabschnitt der Führung herausbewegt wird. Mit anderen Worten, in einer vorgegebenen Stellung der Kolbenstange im Bereich des Querabschnitts der Führung, die im übrigen Verlauf achsparallel linear ist, erfolgt eine Seitwärtsbewegung der Kolbenstange, um den Mitnehmerabschnitt des Bauteils freizugeben oder zwischen dem Mitnehmerabschnitt und dem Rastabschnitt der Kolbenstange eine Rastverbindung herzustellen. In der Anfangsbewegung des Bauteils aus seiner Endlage heraus wird die Feder im Dämpfungszylinder vorgespannt und bleibt in der gespannten Lage, indem der Folger sich im Querabschnitt der Führung befindet. Nach der Freigabe des Mitnehmerabschnitts kann das Bauteil völlig unabhängig von der erfindungsgemäßen Vorrichtung bewegt werden in eine beliebige andere Endlage hinein. Bei der Bewegung des Bauteils in die ursprüngliche Endlage findet in der beschriebenen Art und Weise im Endbereich der Verstellung eine Verrastung zwischen Mitnehmerabschnitt und Rastabschnitt der Kolbenstange statt. Nunmehr gelangt der Mitnehmerabschnitt aus dem Querabschnitt der Führung, und die gespannte Feder kann das Bauteil über die letzte Strecke in die Endstellung einziehen. Diese Verstellung erfolgt jedoch gedämpft, weil die Bewegung des Dämpferkolbens im Dämpfungszylinder eine gedämpfte ist.

Die erfindungsgemäße Vorrichtung setzt sich aus wenigen, vorzugsweise aus Kunststoff geformten Teilen zusammen, nämlich dem Dämpferzylinder, der Führung, der Feder und dem Dämpferkolben, wobei Kolben, Kolbenstange und Rastabschnitt einteilig geformt werden können. Die erfindungsgemäße Vorrichtung kann als Einheit vormontiert und dann als Einheit an dem Beschlag oder an dem Bauteil montiert werden.

In der obigen Beschreibung wird davon ausgegangen, daß der Mitnehmerabschnitt am beweglichen Bauteil angebracht und der Dämpfungszylinder stationär ist. Es ist jedoch auch denkbar, die erfindungsgemäße Vorrichtung insgesamt am beweglichen Bauteil anzubringen und den Mitnehmerabschnitt stationär. Für den Aufbau und die Wirkung macht dies keinen Unterschied.

In den Unteransprüchen sind vorteilhafte Weiterbildungen der Merkmale des Anspruchs angegeben. Der Rastabschnitt am Ende der Kolbenstange ist vorzugsweise so ausgebildet, daß der Mitnehmerabschnitt auch bei vollständig eingezogener Kolbenstange eingerastet werden kann. Dies hat den Vorteil, daß die Feder zur Montage nicht vorgespannt werden muß.

Um eine Verrastung zu erleichtern, weist der Rastabschnitt nach einer Ausgestaltung der Erfindung einen federnden Abschnitt auf, der vom Mitnehmerabschnitt aus gelenkt wird, bis der Mitnehmerabschnitt hinter den federnden Abschnitt schnappt. Hierfür sind verschiedene Konstruktionen denkbar. Eine besteht nach einer Ausführungsform der Erfindung darin, daß der federnde Abschnitt vom freien Schenkel eines Hakenabschnitts mit zur Kolbenstange weisender Öffnung gebildet ist. Der gegenüber der Bewegungsrichtung des Mitnehmerabschnitts vorzugsweise schräg verlaufende Schenkel wird durch den Mitnehmerabschnitt ausgelenkt, bis der freie Schenkel hinter den Mitnehmerabschnitt schnappt.

Nach einer anderen Ausgestaltung der Erfindung ist der Mitnehmerabschnitt als Zapfen oder Stift ausgebildet mit vorzugsweise quer zur Kolbenstange erstreckter Achse. Die Kolbenstange weist nach einer anderen Ausgestaltung der Erfindung am freien Ende eine Verbreiterung auf, an der ein stiftförmiger Folger angebracht ist, der mit der nutförmigen Führung zusammenwirkt. Die Verbreiterung kann sich nach einer anderen Ausgestaltung der Erfindung an einer Schulter abstützen, wenn der Folger sich in einem Querabschnitt befindet. Hierdurch wird die Kolbenstange sicherer in ihrer gespannten Stellung gehalten.

Nach einer weiteren Ausgestaltung der Erfindung befindet sich die Führung in einem länglichen Deckel des Dämpferzylinders, wobei die Deckelwandung einen achsparallelen Schlitz aufweist, über den der Mitnehmerabschnitt in den Deckel hineinsteht.

Ein Ausführungsbeispiel wird nachfolgend anhand von Zeichnungen näher erläutert.
- Fig. 1: zeigt im Schnitt eine Vorrichtung nach der Erfindung in einer Endlage.
- Fig. 2: zeigt die Vorrichtung nach Fig. 1 in einem vorgespannten Zustand, wobei sich das Bauteil von der Vorrichtung entfernt.
- Fig. 3: zeigt eine ähnliche Darstellung wie Fig. 2, wobei das Bauteil sich auf die Vorrichtung zu bewegt.

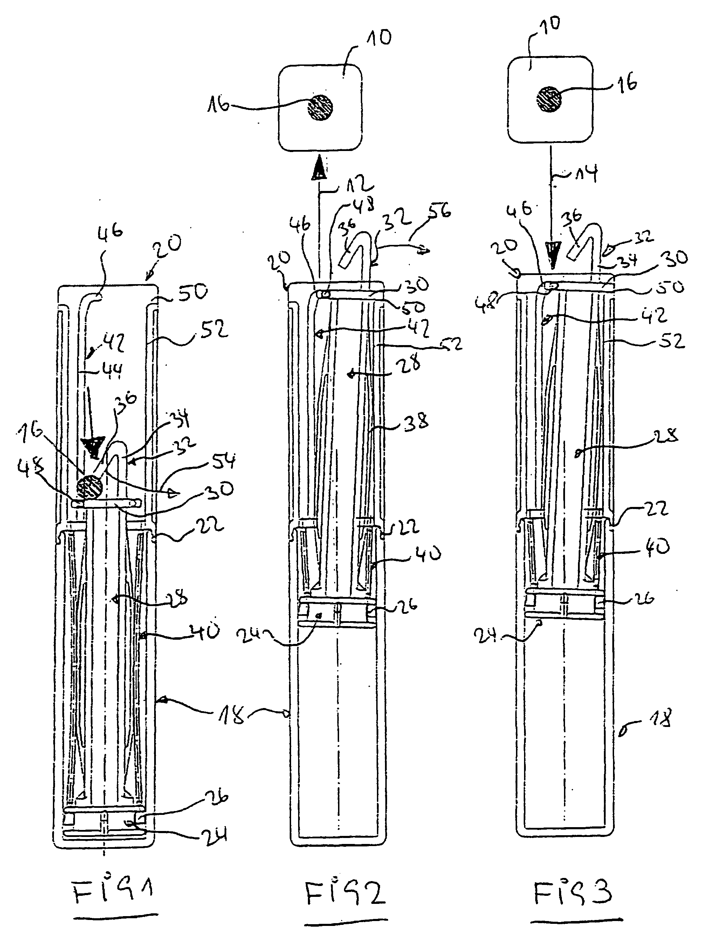

In Figur 2 und 3 ist bei 10 ein Bauteil angedeutet, das sich in Figur 2 in Richtung Pfeil 12 nach oben und in Figur 3 in Richtung Pfeil 14 nach unten bewegt. Es kann sich dabei um den Teil einer Schiebetür, einer Schublade oder dergleichen handeln. Am Bauteil 10 ist quer abstehend ein Zapfen 16 angebracht, der sich annähernd senkrecht zur Zeichenebene erstreckt.

In den Figuren 1 bis 3 ist bei 18 allgemein ein Dämpferzylinder gezeigt, der im unteren Ende einen geschlossenen Boden aufweist und am oberen Ende durch einen langgestreckten Deckel 20 abgeschlossen ist. Der Deckel sitzt über eine nicht im einzelnen dargestellte Schnappverbindung 22 am Dämpfercylinder 18.

Im Dämpferzylinder 18 sitzt ein Dämpferkolben 24, der in einer Nut einen im einzelnen nicht dargestellten Dichtring 26 hält. Der Dichtring, der sich in der breiteren Nut bewegen kann, ist so ausgeführt, daß er bei einer Bewegung des Kolbens 24 nach oben eine geringe Dämpfungswirkung und bei einer Bewegung nach unten eine stärkere Dämpfungswirkung entfaltet. Derartige Dämpferkolben sind an sich bekannt.

Mit dem Kolben 24 ist eine Kolbenstange 28 verbunden, die am oberen Ende eine flanschartige Verbreiterung 30 aufweist. Auf der Verbreiterung 30 befindet sich ein mit der Öffnung nach unten weisender Haken 32, der einen aufrechtstehenden Abschnitt 34 und einen sich schräg nach unten erstreckenden Schenkel 36 aufweist. Kolben 24, Kolbenstange 28, Verbreiterung 30 und Haken 32 sind einteilig aus einem geeignetem Kunststoffmaterial geformt, das so beschaffen ist, daß der Schenkel 36 elastisch verbiegbar ist.

In Umfangsabständen sind an der Kolbenstange Rippen 38 angeformt, die am oberen und unteren Ende rampenartig in die Kolbenstange 28 übergehen. Zwischen dem Kolben 24 und einem Widerlager am Deckel 20 ist eine Druckfeder 40 angeordnet. Sie spannt mithin den Kolben 24 in die untere oder Endlage vor. In der entspannten Lage, wie sie in Figur 1 gezeigt ist, ist die Feder 40 im mittleren Bereich tailliert ausgeführt und liegt leicht an den Rippen 38 an. Dadurch wird bei einer Vibration der gesamten Vorrichtung verhindert, daß Schwirrgeräusche der Feder entstehen.

Im Deckel 20 befindet sich eine allgemein mit 42 bezeichnete Führung, die als Nut oder als Schlitz geformt ist. Die Führung 42 weist einen linearen Abschnitt 44 auf, der sich annähernd über die gesamte Höhe des Deckels 20 erstreckt. Der lineare Abschnitt 44 ist parallel aber versetzt zur Achse der Kolbenstange 28 liegend angeordnet, er kann auch mittig sein. Am oberen Ende ist ein Querabschnitt 46 vorgesehen. Mit der Führung 42 wirkt ein Stift 48 zusammen, der seitlich von der Verbreiterung 30 absteht. Wird die Kolbenstange 28 nach oben gefahren gemäß Pfeil 12, wandert der Stift 48 zunächst entlang des linearen Abschnitts 42, bis er in den Querabschnitt 46 abgelenkt wird. In dieser Position gemäß den Figuren 2 und 3 liegt die Verbreiterung 30 an den dem Stift 48 gegenüberliegenden Ende auf einer Schulter 50, welche durch eine nach innen weisende Rippe 52 im Deckel 20 geformt ist. Auf diese Weise wird die Kolbenstange 28 in der in Figur 2 und 3 gezeigten Lage gehalten trotz erheblicher Vorspannung durch die zusammengedrückte Feder 40. Rippe 52 und Schulter 50 sind Verstärkungsrippen für den Deckel, dienen aber auch zur Führung der Kolbenstange während der Längsbewegung.

Die Kolbenstange wird in der ausgelenkten Position am Stift 48 gehalten.

Der Mitnehmerzapfen 16 kann sich durch einen achsparallelen Schlitz im Deckel 20 in diesen hineinstrecken, was nicht gezeigt ist. In Figur 1 ist zu erkennen, daß der Stift 16 den Schenkel 36 des Hakens 32 hintergreifen kann, nachdem er zuvor den Schenkel 36 um einen bestimmten Betrag ausgelenkt hat, wie durch Pfeil 54 in Figur 1 angedeutet. Mithin kann eine Rastverbindung zwischen Mitnehmerzapfen 16 und der gezeigten Vorrichtung bzw. der Kolbenstange 28 herbeigeführt werden. Wird das Bauteil mit dem Mitnehmerzapfen 16 nach oben bewegt, wird dadurch die Kolbenstange 28 mitgenommen, bis der Stift 48 in den Querabschnitt 46 eingetreten ist, wodurch die Kolbenstange 28 in dieser Lage gehalten ist. Durch das Eintreten des Stiftes 48 in den Querabschnitt 46 wird die Kolbenstange 28 etwas nach rechts verschwenkt, wie aus den Figuren 2 und 3 ersichtlich ist. Diese Schwenkung wird in Figur 2 durch Pfeil 56 angedeutet. Dadurch kommt der Mitnehmerzapfen 16 vom Schenkel 36 frei und das Bauteil kann seine Bewegung nach oben fortsetzen.

Wird das Bauteil 10, z.B. beim Schließen einer Schiebetür oder einer Schublade in Richtung Pfeil 14 bewegt, stößt der Mitnehmerzapfen 16 gegen die Verbreiterung 30. Dadurch wird die Verbreiterung 30 mit der Kolbenstange 28 nach links geschwenkt und mit dem Stift 48 nach links aus dem Querabschnitt 46 herausbewegt. Bei diesem Vorgang greift das freie Ende des Schenkels 36 hinter den Mitnehmerzapfen 16, und die Feder 40 bewegt die Kolbenstange 28 und den Kolben 24 nach unten unter Mitnahme des Bauteils 10 in die in Figur 1 gezeigte Endlage. Mithin erfolgt für das Bauteil 10 für den letzten Rest der Verstellstrecke ein automatischer, gedämpfter Einzug.

## Patentansprüche

1. Vorrichtung zum gedämpften Einzug von beweglichen Bauteilen in eine Endlage, mit
einem Dämpferzylinder (18), der an einem Ende lagefest anbringbar ist, einem Dämpferkolben (24) im Dämpferzylinder (18), an dem eine Kolbenstange (28) angebracht ist, die über das andere Ende des Dämpferzylinders (18) hinaussteht, wenn der Dämpferkolben (24) vollständig in den Dämpferzylinder (18) eingefahren ist,
einer Feder (40) zwischen dem Dämpferkolben (24) und einem Widerlager am anderen Ende des Dämpferzylinder (18) oder einem Deckel (20) für den Dämpferzylinder (18), die den Dämpferkolben (24) zum ersten Ende des Dämpferzylinders hin vorspannt, **gekennzeichnet durch** eine an dem anderem Ende des Dämpferzylinders angebrachte Führung (42) mit einem in Axialrichtung verlaufenden längeren linearen Führungsabschnitt (44) und einem davon abknickenden Querabschnitt (46) am vom Dämpferzylinder (18) entfernt liegenden Ende, mit der ein an der Kolbenstange (28) angebrachter Folger (48) so zusammenwirkt, daß die Kolbenstange (28) **durch** den Querabschnitt (46) der Führung (42) zur Seite hin ausgelenkt wird, wenn sie eine vorgegebene Strecke aus dem Dämpferzylinder (18) herausbewegt worden ist,
und mit einem Rastabschnitt (32) am Ende der Kolbenstange (28), der dazu vorgesehen ist, mit einem Mitnehmerabschnitt (16) am beweglichen Bauteil (10), der sich bei einer Verstellung des Bauteils (10) linear bewegt, so zusammenzuwirken, daß der Rastabschnitt (32) den Mitnehmerabschnitt (16) freigibt, wenn der Folger (48) in den Querabschnitt (46) eingetreten ist, den Mitnehmerabschnitt (16) mitnimmt, sobald der Folger (48) **durch** einen Druck des Mitnehmerabschnitts (16) gegen die Kolbenstange (28) in den linearen Führungsabschnitt (44) bewegt wird und der Mitnehmerabschnitt (16) mit dem Rastabschnitt (32) verrastet ist.

2. Vorrichtung nach Anspruch 1, **dadurch gekennzeichnet, daß** der Rastabschnitt (32) so ausgebildet ist, daß der Mitnehmerabschnitt (16) bei vollständig eingezogener Kolbenstange (28) eingerastet werden kann.

3. Vorrichtung nach Anspruch 1 oder 2, **dadurch gekennzeichnet, daß** der Rastabschnitt (32) einen federnden Abschnitt (36) aufweist, der vom Mitnehmerabschnitt (16) aus gelenkt wird, bis der Mitnehmerabschnitt hinter den federnden Abschnitt (36) schnappt.

4. Vorrichtung nach Anspruch 3, **dadurch gekennzeichnet, daß** der federnde Rastabschnitt (36) vom freien Schenkel eines Hakenabschnitts gebildet ist mit einer zur Kolbenstange (28) weisenden Öffnung.

5. Vorrichtung nach einem der Ansprüche 1 bis 4, **dadurch gekennzeichnet, daß** der Mitnehmerabschnitt (16) von einem Zapfen oder Stift gebildet ist, der sich quer zur Kolbenstange (28) erstreckt.

6. Vorrichtung nach einem der Ansprüche 1 bis 5, **dadurch gekennzeichnet, daß** die Kolbenstange (28) am freien Ende eine Verbreiterung (30) aufweist, an der der stiftförmige Folger (48) angebracht ist, der mit einer nutförmigen Führung (42) zusammenwirkt.

7. Vorrichtung nach Anspruch 6, **dadurch gekennzeichnet, daß** die Verbreiterung (30) sich auf einer Schulter (50) abstützt, wenn der Folger (48) sich im Querabschnitt (46) befindet.

8. Vorrichtung nach einem der Ansprüche 1 bis 7, **dadurch gekennzeichnet, daß** sich die Führung (42) im länglichen Deckel (20) des Dämpferzylinders (18) befindet, wobei die Deckelwandung einen achsparallelen Schlitz aufweist, über den der Mitnehmerabschnitt (16) in den Deckel (20) hineinsteht.

9. Vorrichtung nach Anspruch 7 und 8, **dadurch gekennzeichnet, daß** der Deckel (20) an der Innenseite eine achsparallele Rippe (52) aufweist, welche an dem von Dämpferzylinder (18) abgewandten Ende die Schulter (50) bildet.

10. Vorrichtung nach Anspruch 8 oder 9, **dadurch gekennzeichnet, daß** der Deckel (20) über eine Schnappverbindung (22) mit dem Dämpferzylinder (18) verbunden ist.

11. Vorrichtung nach einem der Ansprüche 1 bis 10, **dadurch gekennzeichnet, daß** die Kolbenstange (28) mehrere axiale längliche Rippen (38) aufweist und die Schraubenfeder (40) so tailliert ist, daß die Windungen mit kleinerem Durchmesser gegen die Rippen (38) anliegen, wenn die Kolbenstange (28) vollständig eingezogen ist.

## Claims

1. A device for damping the movement of movable parts into an end position, comprising:
a damping cylinder (18) having an end which is stationarily attached a damping piston (24) within the damping cylinder (18), a piston rod (28) being attached to the damping piston and extending beyond the other end of the damping cylinder (18) if the damping piston (24) is completely moved into the damping cylinder (28)
spring means (40) between the damping piston (24) and a counter bearing at the other end of the damping cylinder (18) or a lid (20) for the damping cylinder (18) which bias the damping piston (24) towards the other end of the damping cylinder (18), **characterized by**
guiding means (42) mounted to the other end of the damping cylinder and having an elongated linear guiding portion (24) and a transverse portion (46) at the end remote from the damping cylinder (18), a follower (48) mounted on the piston rod (28) cooperating with the guiding means such that the piston rod (28) is laterally deflected by the transverse portion (46) of the guiding means (42) if the piston rod (28) is extended outwardly of the damping cylinder (18) a predetermined length
cam means (16) on part (10) which moves linearly with a displacement of part (10) and cooperates with a locking means (32) at the end of the piston rod (28) such that the locking portion (32) releases cam means (16) if the follower (48) enters the transverse portion (46), takes with it the cam portion (16) as soon as the follower (48) is moved into the linear guiding portion (48) by a pressure of the cam means (16) against piston rod (28), and the cam portion (16) is locked by locking portion (32).

2. The device of claim 1, wherein the locking means (32) is formed such that the cam portion (16) can be locked if the piston rod (28) is completely retracted.

3. The device of claim 1 or 2, wherein the locking portion (32) includes a resilient portion (36) which is deflected by the cam portion (16) until the cam portion snaps behind the resilient portion (36).

4. The device of claim 3, wherein the locking portion (36) is formed by a free leg of a hook portion having an opening facing the piston rod (28).

5. The device of one of the claims 1 to 4, wherein the cam portion (16) is formed by a tab or a pin extending transverse to the piston rod (28).

6. The device of one of the claims 1 to 5, wherein the free end of the piston rod (28) has an enlargement (30), a pin-shaped follower (48) being formed at the enlargement and cooperating with a groove-shaped guiding means (42).

7. The device of claim 6, wherein the enlargement (30) is supported by a shoulder (50) if the follower (48) is within the transverse guiding portion (46).

8. The device of one of the claims 1 to 7, wherein the guiding means (42) are within an elongated lid (20) for the damping cylinder (18), the wall of the lid having a slot extending parallel to the axis of the lid, the cam means (18) extending into the lid (20) through the slot.

9. The device of claim 7 or 8, wherein at the inner wall the lid (20) has a rib (52) extending parallel to the axis of the lid, the rib forming a shoulder (50) at the end remote from the damping cylinder (18).

10. The device of claim 8 or 9, wherein the lid (20) is attached to the damping cylinder (18) through a snapping connection (22).

11. The device of one of the claims 1 to 10, wherein the piston rod (28) has a plurality of axially extending elongated ribs (38), and a coil spring (40) has a waist such that the windings of the coil spring having a smaller diameter engage the ribs (38) if the piston rod (28) is completely retracted.

## Revendications

1. Dispositif pour introduire de façon amortie des composants mobiles dans une position finale, comportant
un vérin amortisseur (18), apte à être agencé en position fixe en une extrémité, un piston amortisseur (24) dans le vérin amortisseur (18), contre lequel est montée une tige de piston (28) qui s'avance vers l'extérieur à travers l'autre extrémité du vérin amortisseur (18) lorsque le piston amortisseur (24) est complètement rétracté dans le vérin amortisseur (18),
un ressort (40) entre le piston amortisseur (24) et une contre-butée sur l'autre extrémité du vérin amortisseur (18) ou un couvercle (20) pour le vérin amortisseur (18), par lequel ressort le piston amortisseur (24) est précontraint vers la première extrémité du vérin amortisseur,
**caractérisé par** un guidage (42) agencé sur l'autre extrémité du vérin amortisseur, comportant, sur l'extrémité éloignée du vérin amortisseur (18), un tronçon de guidage (44) linéaire relativement long, orienté dans le sens axial, et un tronçon transversal (46) formant un coude à partir de celui-ci, lequel guidage coopère avec un suiveur (48) agencé contre la tige de piston (28), de telle sorte que la tige de piston (28) est déviée vers le côté par le tronçon transversal (46) du guidage (42) lorsqu'elle se déplace sur une distance prédéfinie hors du vérin amortisseur (18),
et avec une partie à cran d'arrêt (32) sur l'extrémité de la tige de piston (28), qui est prévue pour coopérer avec une partie d'entraînement (16) sur le composant (10) mobile, qui se déplace linéairement en cas de déplacement du composant (10), de telle sorte que la partie à cran d'arrêt (32) libère la partie d'entraînement (16) lorsque le suiveur (48) est entré dans le tronçon transversal (46), entraîne la partie d'entraînement (16) dès que le suiveur (48) se déplace dans le tronçon de guidage (44) linéaire, sous l'effet d'une pression de la partie d'entraînement (16) contre la tige de piston (28), et bloque la partie d'entraînement (16) avec la partie à cran d'arrêt (32).

2. Dispositif selon la revendication 1, **caractérisé en ce que** la partie à cran d'arrêt (32) est conçue de telle sorte que la partie d'entraînement (16) peut être encliquetée lorsque la tige de piston (28) est complètement rétractée.

3. Dispositif selon la revendication 1 ou 2, **caractérisé en ce que** la partie à cran d'arrêt (32) comporte un tronçon flexible (36), qui est dévié par la partie d'entraînement (16) jusqu'à ce que la partie d'entraînement est encliquetée derrière le tronçon flexible (36).

4. Dispositif selon la revendication 3, **caractérisé en ce que** le tronçon flexible (36) est formé par la branche libre d'une partie formant crochet, avec une ouverture orientée vers la tige de piston (28).

5. Dispositif selon l'une quelconque des revendications 1 à 4, **caractérisé en ce que** la partie d'entraînement (16) est formée par un téton ou une pointe, qui s'étend transversalement à la tige de piston (28).

6. Dispositif selon l'une quelconque des revendications 1 à 5, **caractérisé en ce que** la tige de piston (28) comporte sur son extrémité libre un élargissement (30), sur lequel est disposé le suiveur (48) en forme de pointe, qui coopère avec un guidage (42) en forme de rainure.

7. Dispositif selon la revendication 6, **caractérisé en ce que** l'élargissement (30) prend appui sur un épaulement (50) lorsque le suiveur (48) se situe dans le tronçon transversal (46).

8. Dispositif selon l'une quelconque des revendications 1 à 7, **caractérisé en ce que** le guidage (42) est réalisé dans le couvercle (20) allongé du vérin amortisseur (18), la paroi du couvercle comportant une fente parallèle au sens axial, par laquelle la partie d'entraînement (16) s'avance dans le couvercle (20).

9. Dispositif selon les revendications 7 et 8, **caractérisé en ce que** le couvercle (20) comporte sur sa face intérieure une nervure (52) parallèle au sens axial, qui forme l'épaulement (50) sur l'extrémité opposée au vérin amortisseur (18).

10. Dispositif selon la revendication 8 ou 9, **caractérisé en ce que** le couvercle (20) est assemblé au vérin amortisseur (18) par l'intermédiaire d'un assemblage à encliqueter (22).

11. Dispositif selon l'une quelconque des revendications 1 à 10, **caractérisé en ce que** la tige de piston (28) comporte plusieurs nervures (38) longitudinales axiales et le ressort à boudin (40) est taillé de telle sorte que les spires à plus petit diamètre sont en appui contre les nervures (38) lorsque la tige de piston (28) est complètement rétractée.
